# EUROPEAN PATENT APPLICATION

(11) **EP 2 537 643 A2**
(43) Date of publication of application: **26.12.2012**
(21) Application number: 12172944.6
(22) Date of filing: 21.06.2012
(51) Int. Cl.: B25J 9/10

(54) **Speed reducer, robot, and robot hand**

(30) Priority: 23.06.2011 JP 2011139555
(71) Applicant: Seiko Epson Corporation, Tokyo 163 (JP)
(72) Inventor: Yamamoto, Sota, Nagano, 392-8502 (JP)
(74) Representative: HOFFMANN EITLE

(57) **Abstract**

A ring gear (6) having a plurality of gear teeth (6a) formed on an inner perimeter, a first revolving gear (7) having a plurality of gear teeth (7a) formed on an outer perimeter, the first revolving gear meshing with the ring gear, a first eccentric cam (11) provided in a center position of the first revolving gear in such a way as to be rotatable with respect to the first revolving gear, a first rotating shaft (3) provided in the first eccentric cam, the first rotating shaft making the first revolving gear revolve about a central axis (5) by rotating the first eccentric cam, a through pin (13) inserted into a first through hole (7c) placed in the first revolving gear, a second rotating shaft (4) connected to the through pin, the second rotating shaft outputting the rotation obtained by the rotation of the first revolving gear on the axis thereof, and a first elastic section (14) located between the first through hole and the through pin, the first elastic section making contact with the first through hole and the through pin are provided, and the sum of the area of a place in which the first elastic section makes contact with the through pin is made greater than the sum of the area of a place in which the first elastic section makes contact with the first through hole.

## Description

### BACKGROUND

### 1. Technical Field

The present invention relates to speed reducers, robots, and robot hands.

### 2. Related Art

The power obtained from a power source such as a motor cannot be used as it is because the rotation speed thereof is often too high or the torque thereof is often insufficient. It is for this reason that reducing the rotation speed to an adequate rotation speed by using a speed reducer to produce a necessary number of revolutions and necessary torque is widely carried out.

A speed reducer by which a large reduction ratio can be obtained has been disclosed in JP-A-2008-240852 (Patent Document 1). The speed reducer includes a ring gear, and a revolving gear that is slightly smaller than the ring gear and has a smaller number of teeth than that of the ring gear is provided inside the ring gear. In the center position of the revolving gear, a circular cam is provided in a state in which the circular cam can rotate with respect to the revolving gear. On the circular cam, a first rotating shaft is installed in a standing manner in a position above a central axis of the ring gear. When the circular cam is rotated by the first rotating shaft about the central axis of the ring gear, the revolving gear revolves about the central axis of the ring gear while meshing with the ring gear. In such a structure, while the revolving gear makes one revolution about the central axis of the ring gear, the revolving gear rotates on the axis thereof in a direction opposite to the direction of revolution by the difference in the number of teeth between the revolving gear and the ring gear. Therefore, by extracting the movement of the rotation of the revolving gear on the axis thereof, it is possible to reduce greatly the speed of the rotation input to the first rotating shaft.

The movement of the rotation of the revolving gear on the axis thereof is extracted by a through hole provided in the revolving gear and a through pin inserted into the through hole. Between the through hole and the through pin, clearance is created. With this clearance, the movement of the rotation of the revolving gear on the axis thereof is extracted by the through pin, and at the same time the movement of the revolution of the revolving gear is absorbed. The movement of the rotation of the revolving gear on the axis thereof, the movement of the rotation extracted by the through pin in this manner, is output to the outside from a second rotating shaft to which the through pin is connected.

However, backlash tends to occur in the above-mentioned speed reducer described in Patent Document 1. That is, before an input to the first rotating shaft is output from the second rotating shaft, in addition to normal backlash which occurs in a portion in which the ring gear and the revolving gear mesh with each other, backlash also occurs in a portion in which the through hole of the revolving gear and the through pin come into contact with each other. The latter backlash occurs due to a production error, and accordingly large backlash tends to occur as a whole. As a result, there is a period in which output torque cannot be obtained from an input when the direction of rotation of the first rotating shaft is inverted, or large backlash occurs in the second rotating shaft. Moreover, since the through pin transfers torque while being slid on the through hole, the through pin wears.

Therefore, a speed reducer that can prevent a through pin from wearing by preventing or avoiding the occurrence of backlash in a portion in which a through hole of a revolving gear and the through pin come into contact with each other has been sought after.

### SUMMARY

An advantage of some aspects of the invention is to solve at least part of the problems described above, and the invention can be implemented as embodiments or application examples described below.

### Application Example 1

This application example is directed to a speed reducer including: a ring gear having a hollow, the ring gear having a plurality of gear teeth formed on an inner perimeter of the hollow; a revolving gear having a plurality of gear teeth formed therein, the revolving gear meshing with the gear teeth on the inner perimeter of the ring gear; a circular cam provided in a center position of the revolving gear in such a way as to be rotatable with respect to the revolving gear; a first rotating shaft provided in the circular cam and located on a central axis of the ring gear, the first rotating shaft making the revolving gear revolve about the central axis by rotating the circular cam about the central axis; a through pin inserted into a through hole formed in the revolving gear; a second rotating shaft provided on the central axis and connected to the through pin, the second rotating shaft outputting rotation obtained by rotation of the revolving gear on an axis thereof; and an elastic section located between the through hole and the through pin, the elastic section making contact with the through hole and the through pin and having elasticity, and the sum of the area of a place in which the elastic section makes contact with the through pin is greater than the sum of the area of a place in which the elastic section makes contact with the through hole.

According to this application example, when the first rotating shaft is rotated, the circular cam rotates about the central axis. Then, the circular cam rotates, and the revolving gear revolves about the central axis. The revolving gear meshes with the ring gear, and, when the revolving gear revolves, the revolving gear rotates on the axis thereof at the same time. The direction in which the revolving gear rotates on the axis thereof is opposite to the direction in which the revolving gear revolves, and the angle at which the revolving gear rotates on the axis thereof is an angle corresponding to the difference between the number of teeth of the ring gear and the number of teeth of the revolving gear. The movement of the rotation of the revolving gear on the axis thereof is transferred to the through pin inserted into the through hole of the revolving gear. The speed of the rotation of the revolving gear on the axis thereof, the rotation transferred to the through pin, is reduced as compared to the rotation of the first rotating shaft. The rotation whose speed has been reduced is output from the second rotating shaft connected to the through pin.

Between the through hole and the through pin, the elastic section is placed, and the elastic section makes contact with the through hole and the through pin. In addition, the elastic section urges the through pin and the through hole. Therefore, when the revolving gear rotates, the elastic section is deformed, and the torque of the revolving gear is transferred to the through pin. When the direction of rotation of the revolving gear is switched, the amount of deformation of the elastic section is changed in response to changes in the torque of the revolving gear. As a result, since a state in which the through hole and the through pin make contact with each other with the elastic section sandwiched between the through hole and the through pin is maintained, it is possible to prevent or avoid the occurrence of backlash between the through hole and the through pin.

Moreover, when the first rotating shaft rotates, the through pin and the through hole relatively rotate. Since the elastic section is sandwiched between the through hole and the through pin, the elastic section slides in the through hole and on the through pin. In addition, since the curvature of a place in which the elastic section makes contact with the through pin is greater than the curvature of a place in which the elastic section makes contact with the through hole, when the revolving gear rotates, the pressure applied to the side of the elastic section where the through pin is located becomes greater than the pressure applied to the side of the elastic section where the through hole is located, and the side of the elastic section where the through pin is located tends to wear. In this application example, the sum of the area of the side of the elastic section where the through pin is located is greater than the sum of the area of the side of the elastic section where the through hole is located. Therefore, since the side of the elastic section where the through pin is located and the side of the elastic section where the through hole is located wear in a similar way, it is possible to increase the life determined by wear.

### Application Example 2

This application example is directed to the speed reducer according to the application example described above, wherein the elastic section has a cylindrical shape, and the elastic section has a groove portion on a face of the elastic section, the face making contact with the through hole, the groove portion extending in a circumferential direction.

According to this application example, the elastic section has a cylindrical shape and makes contact with the through hole. The elastic section has, on a face thereof facing the through hole, the groove portion extending in a circumferential direction. When the elastic section is pressed by the through pin and the through hole, the elastic section is easily deformed elastically due to the presence of the groove portion. This makes it possible to make the elastic section elastic. In addition, the presence of the groove portion on the face of the elastic section on the side thereof where the through hole is located reduces the area of a face making contact with the through hole. Therefore, it is possible to make the sum of the area of a side of the elastic section, the side where the through pin is located, greater than the sum of the area of a side of the elastic section, the side where the through hole is located.

### Application Example 3

This application example is directed to the speed reducer according to the application example described above, wherein the groove portion has a triangular cross-sectional shape.

According to this application example, since the groove portion has a triangular cross-sectional shape, it is possible to deform the elastic section elastically in such a way that an opening of the groove portion is widened. This makes it easy to make the elastic section elastic.

### Application Example 4

This application example is directed to the speed reducer according to the application example described above, wherein in the triangular cross-sectional shape, a triangle has an arc-shaped vertex.

According to this application example, since the groove portion has an arc-shaped vertex, it is possible to prevent the stress from concentrating onto the vertex. As a result, even when a repetitive load is applied to the elastic section, it is possible to increase the life of the elastic section.

### Application Example 5

This application example is directed to the speed reducer according to the application example described above, wherein the elastic section has one face making contact with the through pin and has two faces making contact with the through hole.

According to this application example, since there is one face on the side where the through pin is located, there is no need for processing for dividing the face on the side where the through pin is located into a plurality of faces. This makes it possible to produce the elastic section with great productivity.

### Application Example 6

This application example is directed to the speed reducer according to the application example described above, wherein the elastic section has a side face facing in an axial direction of the through pin, and, in a place in which a face of the elastic section, the face making contact with the through hole, and the side face intersect with each other, an inclined surface obliquely intersecting with the face making contact with the through hole is formed.

According to this application example, since the inclined surface obliquely intersecting with the face making contact with the through hole is formed in the elastic section, it is possible to place the elastic section in the through hole with ease.

### Application Example 7

This application example is directed to the speed reducer according to the application example described above, wherein a material of the elastic section is stainless steel.

According to this application example, the material of the elastic section is stainless steel. Since stainless steel has higher strength than common steel, it is possible to increase the life of the elastic section to which a repetitive load is applied.

### Application Example 8

This application example is directed to the speed reducer according to the application example described above, wherein on a face of the elastic section, the face making contact with the through pin, a DLC coating is formed.

According to this application example, on a face of the elastic section, the face making contact with the through pin, a DLC (diamond like carbon) coating is formed. Since the DLC coating has high hardness and is resistant to wear, it is possible to prevent a face of the elastic section on the side where the through pin is located from wearing.

### Application Example 9

This application example is directed to the speed reducer according to the application example described above, wherein on a face of the elastic section, the face making contact with the through hole, a DLC coating is formed.

According to this application example, on a face of the elastic section, the face making contact with the through hole, a DLC coating is formed. Since the DLC coating has high hardness and is resistant to wear, it is possible to prevent a face of the elastic section, the face making contact with the through hole, from wearing.

### Application Example 10

This application example is directed to a speed reducer including: a ring gear having a hollow, the ring gear having a plurality of gear teeth formed on an inner perimeter of the hollow; a revolving gear having a plurality of gear teeth formed therein, the revolving gear meshing with the gear teeth on the inner perimeter of the ring gear; a circular cam provided in a center position of the revolving gear in such a way as to be rotatable with respect to the revolving gear; a first rotating shaft provided in the circular cam and located on a central axis of the ring gear, the first rotating shaft making the revolving gear revolve about the central axis by rotating the circular cam about the central axis; a through pin inserted into a through hole formed in the revolving gear; a second rotating shaft provided on the central axis and connected to the through pin, the second rotating shaft outputting rotation obtained by rotation of the revolving gear on an axis thereof; and an elastic section located between the through hole and the through pin, the elastic section making contact with the through pin, the elastic section placed by being fixed to the through hole, the elastic section having elasticity, and the elastic section has a groove portion on a side of the elastic section where the through hole is located, the groove portion extending in a circumferential direction.

According to this application example, the elastic section is placed between the through hole and the through pin, and the elastic section makes contact with the through pin. In addition, the elastic section urges the through pin. Therefore, when the revolving gear rotates, the elastic section is deformed, and the torque of the revolving gear is transferred to the through pin. When the direction of rotation of the revolving gear is switched, the amount of deformation of the elastic section is changed in response to changes in the torque of the revolving gear. As a result, since a state in which the through hole and the through pin make contact with each other with the elastic section sandwiched between the through hole and the through pin is maintained, it is possible to prevent or avoid the occurrence of backlash between the through hole and the through pin.

Moreover, the elastic section has the groove portion on the side of the elastic section where the through hole is located, the groove portion extending in a circumferential direction. Since it is possible to deform the elastic section elastically in such a way that the groove portion is deformed when the elastic section is pressed by the through pin and the through hole, it is possible to provide elasticity to the elastic section. In addition, since the elastic section is placed by being fixed to the revolving gear, it is possible to prevent a place other than a place making contact with the through pin from wearing. This makes it possible to increase the life of the elastic section, the life determined by wear.

### Application Example 11

This application example is directed to robot hand including: a motor; a speed reducer reducing the speed of an output of the motor; and a movable portion that can be moved by an output of the speed reducer, and the speed reducer is the speed reducer described in any of the application examples described above.

According to this application example, the robot hand has the motor, the speed reducer, and the movable portion. The speed reducer reduces the speed of an output of the motor. This makes it possible to increase the torque which is output from the motor. In addition, it is possible to operate the movable portion by using the high torque output. The speed reducer is the speed reducer described in the above-mentioned application example. Therefore, in the speed reducer, the occurrence of backlash between the through pin and the through hole is prevented. Furthermore, a long-life elastic section is provided between the through pin and the through hole. As a result, the robot hand of this application example can be provided as a robot hand provided with the speed reducer having a long-life elastic section between the through pin and the through hole, the speed reducer in which the occurrence of backlash between the through pin and the through hole is prevented.

### Application Example 12

This application example is directed to a robot including: a motor; a speed reducer reducing the speed of an output of the motor; and a movable portion that can be moved by an output of the speed reducer, and the speed reducer is the speed reducer described in any of the application examples described above.

According to this application example, the robot has the motor, the speed reducer, and the movable portion. The speed reducer reduces the speed of an output of the motor. This makes it possible to increase the torque which is output from the motor. In addition, it is possible to operate the movable portion by using the high torque output. The speed reducer is the speed reducer described in the above-mentioned application example. Therefore, in the speed reducer, the occurrence of backlash between the through pin and the through hole is prevented. Furthermore, a long-life elastic section is provided between the through pin and the through hole. As a result, the robot of this application example can be provided as a robot provided with the speed reducer having a long-life elastic section between the through pin and the through hole, the speed reducer in which the occurrence of backlash between the through pin and the through hole is prevented.

### Application Example 13

This application example is directed to an electronic apparatus including: a motor; a speed reducer reducing the speed of an output of the motor; and a movable portion that can be moved by an output of the speed reducer, and the speed reducer is the speed reducer described in any of the application examples described above.

According to this application example, the electronic apparatus has the motor, the speed reducer, and the movable portion. The speed reducer reduces the speed of an output of the motor. This makes it possible to increase the torque which is output from the motor. In addition, it is possible to operate the movable portion by using the high torque output. The speed reducer is the speed reducer described in the above-mentioned application example. Therefore, in the speed reducer, the occurrence of backlash between the through pin and the through hole is prevented. Furthermore, a long-life elastic section is provided between the through pin and the through hole. As a result, the electronic apparatus of this application example can be provided as an electronic apparatus provided with the speed reducer having a long-life elastic section between the through pin and the through hole, the speed reducer in which the occurrence of backlash between the through pin and the through hole is prevented.

### BRIEF DESCRIPTION OF THE DRAWINGS

The invention will be described with reference to the accompanying drawings, wherein like numbers reference like elements.

Fig. 1 is a schematic perspective view showing the appearance of a speed reducer according to a first embodiment.

Fig. 2 is a schematic exploded perspective view showing the internal structure of the speed reducer.

Figs. 3A to 3I are schematic diagrams illustrating the operation of the speed reducer.

Figs. 4A to 4E are schematic diagrams illustrating a method for outputting the rotation torque of a first revolving gear.

Fig. 5A is a schematic sectional view of a principal portion, the schematic sectional view showing elastic sections, and Fig. 5B is a schematic sectional view of a principal portion, the schematic sectional view illustrating the deformation of the elastic section.

Fig. 6 is a schematic sectional view of a principal portion, the schematic sectional view showing an elastic section according to a comparative example.

Figs. 7A to 7G are schematic sectional views of a principal portion, the schematic sectional views showing elastic sections according to a third embodiment.

Fig. 8A is a schematic plan view showing the structure of a robot hand according to a fourth embodiment, and Fig. 8B is a schematic plan view showing the structure of a robot according to a fourth embodiment.

### DESCRIPTION OF EXEMPLARY EMBODIMENTS

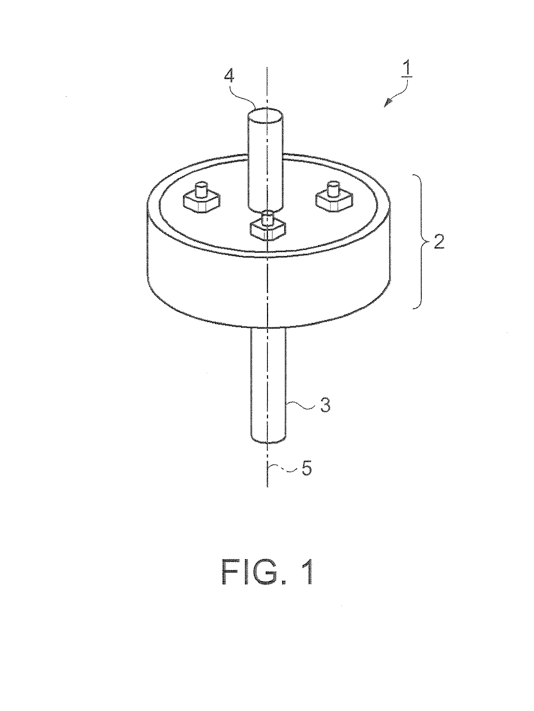

In an embodiment, a characteristic example of a speed reducer will be described with reference to Figs. 1 to 6. Hereinafter, the embodiment will be described with reference to the drawings. Incidentally, component elements in the drawings are illustrated on different scales to make the component elements have recognizable sizes in the drawings.

### First Embodiment

Fig. 1 is a schematic perspective view showing the appearance of a speed reducer. As shown in Fig. 1, a speed reducer 1 includes a cylindrical main body section 2. At one end of the main body section 2 in the axial direction thereof, a first rotating shaft 3 is provided, and, at the other end of the main body section 2 in the axial direction thereof, a second rotating shaft 4 is provided. The first rotating shaft 3 and the second rotating shaft 4 rotate about the same central axis 5. In addition, an axis of the main body section 2 is also disposed on the same line as the central axis 5. When the first rotating shaft 3 is rotated in a state in which the main body section 2 is fixed, the speed of the rotation is reduced by a mechanism in the main body section 2 and is output from the second rotating shaft 4. That is, the first rotating shaft 3 is an input shaft that rotates at high speed, and the second rotating shaft 4 is an output shaft that rotates at low speed.

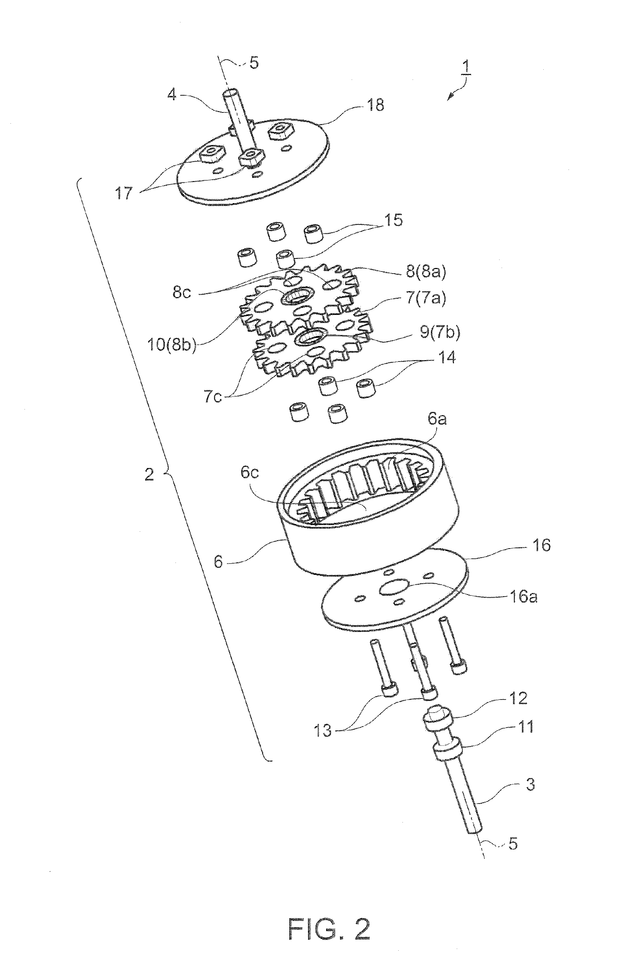

Fig. 2 is a schematic exploded perspective view showing the internal structure of the speed reducer. As shown in Fig. 2, the speed reducer 1 includes a cylindrical ring gear 6 forming the outer perimeter of the main body section 2. Therefore, the inside of the ring gear 6 is a hollow 6c. On the inner perimeter of the ring gear 6, a plurality of gear teeth 6a are formed. Moreover, inside the ring gear 6, a first revolving gear 7 and a second revolving gear 8 as revolving gears are placed. The outer perimeters of the first revolving gear 7 and the second revolving gear 8 are slightly smaller than the inner perimeter of the ring gear 6. On the outer perimeter of the first revolving gear 7, a plurality of gear teeth 7a are disposed, and, on the outer perimeter of the second revolving gear 8, a plurality of gear teeth 8a are disposed. The number of teeth of the gear teeth 7a is equal to the number of teeth of the gear teeth 8a. Furthermore, the number of teeth of the gear teeth 7a and the number of teeth of the gear teeth 8a are smaller than the number of teeth of the gear teeth 6a. In addition, the first revolving gear 7 and the second revolving gear 8 are disposed in the ring gear 6 in such a way that the gear teeth 7a and the gear teeth 8a mesh with the gear teeth 6a.

In the center of the first revolving gear 7, a shaft hole 7b is provided, and, in the center of the second revolving gear 8, a shaft hole 8b is provided. In the shaft hole 7b, a first bearing 9 is placed, and, in the shaft hole 8b, a second bearing 10 is placed. On the first rotating shaft 3, a first eccentric cam 11 and a second eccentric cam 12 as circular cams are placed. The first eccentric cam 11 and the second eccentric cam 12 have a circular outer shape, and the center of the outer shape is eccentrically disposed with respect to the central axis 5. The first eccentric cam 11 and the second eccentric cam 12 are equal in the amount of eccentricity with respect to the central axis 5. In addition, when an angle which the center of the first eccentric cam 11, the central axis 5, and the center of the second eccentric cam 12 form with one another is referred to as an eccentric angle, the eccentric angle is 180 degrees. That is, the center of the first eccentric cam 11, the central axis 5, and the center of the second eccentric cam 12 are disposed on the same straight line.

The first eccentric cam 11 is placed in an inner ring of the first bearing 9, and the second eccentric cam 12 is placed in an inner ring of the second bearing 10. As a result, a position in which the gear teeth 7a mesh with the gear teeth 6a, a position in which the gear teeth 8a mesh with the gear teeth 6a, and the central axis 5 are disposed on the same straight line.

In the first revolving gear 7, first through holes 7c are provided in four positions on the circumference of a circle whose center corresponds to the center of the first revolving gear 7. A through pin 13 for extracting the movement of the rotation of the first revolving gear 7 on the axis thereof is inserted into each first through hole 7c. A first elastic section 14 as an elastic section having a virtually cylindrical shape and elasticity is fitted into each first through hole 7c in such a way as to make contact with the inner wall of the first through hole 7c, and is placed in such a way that the inner wall of the first elastic section 14 makes contact with the through pin 13. Therefore, when the first revolving gear 7 rotates, each first through hole 7c moves the through pin 13 by pressing the through pin 13 via the first elastic section 14.

Likewise, in the second revolving gear 8, second through holes 8c are provided in four positions on the circumference of a circle whose center corresponds to the center of the second revolving gear 8. The through pin 13 for extracting the movement of the rotation of the second revolving gear 8 on the axis thereof is inserted into each second through hole 8c. A second elastic section 15 as an elastic section having a virtually cylindrical shape and elasticity is fitted into each second through hole 8c in such a way as to make contact with the inner wall of the second through hole 8c, and is placed in such a way that the inner wall of the second elastic section 15 makes contact with the through pin 13. Therefore, when the second revolving gear 8 rotates, each second through hole 8c moves the through pin 13 by pressing the through pin 13 via the second elastic section 15.

The through pins 13 are attached to a disk-shaped lower lid plate 16 on the side of the main body section 2 where the first rotating shaft 3 is located and are secured to a disk-shaped upper lid plate 18 by nuts 17 on the side of the main body section 2 where the second rotating shaft 4 is located. The lower lid plate 16 and the upper lid plate 18 sandwich the ring gear 6 with a predetermined clearance left in the axial direction of the central axis 5. This allows the lower lid plate 16 and the upper lid plate 18 to rotate with respect to the ring gear 6.

In the center of the lower lid plate 16, a central hole 16a is formed, and the first rotating shaft 3 is inserted into the central hole 16a. In addition, an end of the first rotating shaft 3, the end at which the first eccentric cam 11 and the second eccentric cam 12 are placed, is connected to the first bearing 9 and the second bearing 10. The other end of the first rotating shaft 3 is placed in such a way as to protrude to the outside of the main body section 2. In the center of the upper lid plate 18, the second rotating shaft 4 is secured. When the upper lid plate 18 rotates, the rotation torque of the upper lid plate 18 is transferred to the second rotating shaft 4.

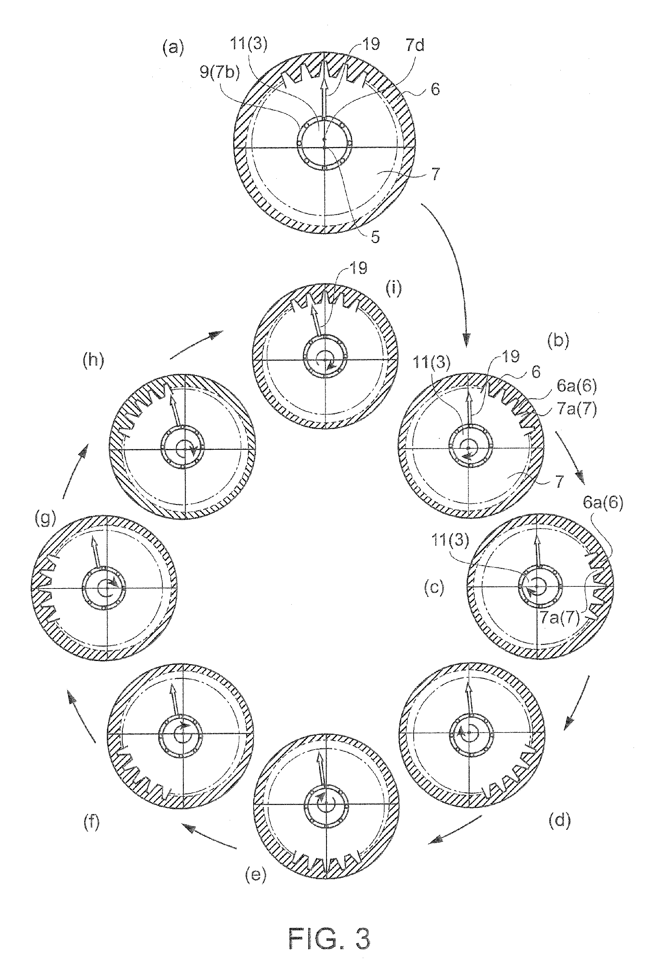

Figs. 3A to 3I are schematic diagrams illustrating the operation of the speed reducer. Inside the ring gear 6, the first revolving gear 7 and the second revolving gear 8 which are smaller than the ring gear 6 are provided. The first revolving gear 7 and the second revolving gear 8 behave in a similar manner. To describe the behavior in an easy-to-understand manner, the behavior of the first revolving gear 7 will be described. As shown in Fig. 3A, the first revolving gear 7 is eccentric with respect to the center position of the ring gear 6. In addition, the ring gear 6 and the first revolving gear 7 mesh with each other in one place. Moreover, the shaft hole 7b is provided in the center of the first revolving gear 7, and the first eccentric cam 11 is fitted into the shaft hole 7b with the first bearing 9 sandwiched between the first eccentric cam 11 and the shaft hole 7b. When the first rotating shaft 3 is rotated, the first eccentric cam 11 rotates and makes the first revolving gear 7 revolve about the central axis 5 of the first rotating shaft 3. Incidentally, a "revolution" in this specification refers to a revolving movement of an object about a certain point.

Moreover, the first bearing 9 allows the first revolving gear 7 to rotate with respect to the first eccentric cam 11, and the first revolving gear 7 and the ring gear 6 mesh with each other by the gear teeth 7a and the gear teeth 6a. As a result, the first revolving gear 7 revolves about the central axis 5 of the first rotating shaft 3 while rotating on the axis thereof by a meshing engagement with the gear teeth of the ring gear 6.

Incidentally, the "rotation of a certain object on the axis thereof" in this specification refers to the movement of the object rotating by using, as a central axis, an axis passing through a point inside the object. For example, the "rotation of a certain object on the axis thereof" in this specification refers to the movement of the first revolving gear 7 rotating by using, as a central axis, an axis passing through a center 7d of the first revolving gear 7.

The first eccentric cam 11 is eccentric to an upper side in the drawing. Therefore, the first revolving gear 7 meshes with the ring gear 6 in the upper side in the drawing. Incidentally, an arrow 19 is drawn on the first revolving gear 7 to make it possible to understand a state in which the first revolving gear 7 rotates on the axis thereof. The operation starts from a state in which the arrow 19 points upward in the drawing.

As shown in Fig. 3B, the first rotating shaft 3 is rotated only 45 degrees in a clockwise direction. As a result, due to the working of the first eccentric cam 11, the first revolving gear 7 also revolves only 45 degrees in a clockwise direction. Moreover, since the first revolving gear 7 meshes with the ring gear 6, the first revolving gear 7 rotates on the axis thereof by an angle corresponding to the number of gear teeth in a counterclockwise direction. As is clear from a comparison between Fig. 3A and Fig. 3B, with the 45-degree rotation of the first eccentric cam 11 in a clockwise direction, the first revolving gear 7 also revolves only 45 degrees in a clockwise direction and moves to a position eccentric to an upper right side in the drawing. Furthermore, the arrow 19 drawn on the first revolving gear 7 points almost upward in the drawing as in Fig. 3A. This is because, when the first revolving gear 7 is revolved in a clockwise direction, the rotation of the first revolving gear 7 on the axis thereof in a counterclockwise direction, the rotation generated by a meshing engagement with the ring gear 6, virtually cancels out the revolution in a clockwise direction.

As shown in Fig. 3C, the first rotating shaft 3 is further rotated only 45 degrees in a clockwise direction. As a result, the first revolving gear 7 enters a state in which the first revolving gear 7 revolved only 90 degrees in a clockwise direction. Moreover, as the first revolving gear 7 revolves to this position while meshing with the ring gear 6, the first revolving gear 7 rotates on the axis thereof by an angle corresponding to the number of teeth of the gear teeth 7a, the teeth meshing with the gear teeth 6a, in a counterclockwise direction. Moreover, the arrow 19 drawn on the first revolving gear 7 still points almost upward in the drawing as in Fig. 3B.

When the first rotating shaft 3 is further rotated 45 degrees, 90 degrees, 135 degrees, 180 degrees, 225 degrees, and 270 degrees in a clockwise direction, the first revolving gear 7 transitions to states shown in Figs. 3D to 3I. When the first rotating shaft 3 is rotated 360 degrees, the state enters a state shown in Fig. 3I. Moreover, as compared to Fig. 3A, the arrow 19 drawn on the first revolving gear 7 rotates in a counterclockwise direction by the difference between the number of teeth of the first revolving gear 7 and the number of teeth of the ring gear 6.

For example, when the number of teeth of the first revolving gear 7 is smaller than the number of teeth of the ring gear 6 by one, the revolution of the first revolving gear 7 in a clockwise direction and the rotation of the first revolving gear 7 on the axis thereof in a counterclockwise direction virtually cancel out each other. In a precise sense, with each revolution, the angle at which the first revolving gear 7 rotates on the axis thereof becomes larger by one gear tooth 7a. This is caused by the number of gear teeth 7a of the first revolving gear 7, the number of gear teeth 7a which is smaller than the number of gear teeth 6a of the ring gear 6 by one. As a result, the first revolving gear 7 has to rotate on the axis thereof 360 degrees and further rotate on the axis thereof by one tooth in a counterclockwise direction to make one revolution in a clockwise direction while meshing with the ring gear 6.

As described above, when the first rotating shaft 3 is rotated 360 degrees, the first revolving gear 7 rotates on the axis thereof in an opposite direction by the number of teeth corresponding to the difference between the number of teeth of the first revolving gear 7 and the number of teeth of the ring gear 6. For example, when the ring gear 6 has 50 teeth and the first revolving gear 7 has 49 teeth, the first revolving gear 7 rotates on the axis thereof only 1/50 of a turn (= 7.2 degrees (360 degrees divided by 50)) in an opposite direction every time the first rotating shaft 3 is rotated 360 degrees.

Moreover, the movement of the first revolving gear 7 when the first rotating shaft 3 is rotated can be considered as follows. First, when the first rotating shaft 3 is rotated, the first revolving gear 7 revolves about the central axis 5 of the first rotating shaft 3 by the first eccentric cam 11. On the other hand, since the first revolving gear 7 meshes with the ring gear 6, the first revolving gear 7 rotates on the axis thereof while rolling on the ring gear 6.

As described above, the number of teeth of the first revolving gear 7 is set to be slightly smaller than the number of teeth of the ring gear 6. As a result, by driving the first revolving gear 7 by rotating the first eccentric cam 11, it is possible to roll the first revolving gear 7 while making the first revolving gear 7 mesh with the ring gear 6 with almost no rotation of the first revolving gear 7 on the axis thereof. For example, the first revolving gear 7 is moved with respect to the ring gear 6 from a position shown in Fig. 3A to a position shown in Fig. 3I. During this movement, the first revolving gear 7 rotates on the axis thereof only by an angle corresponding to the difference between the number of teeth of the ring gear 6 and the number of teeth of the first revolving gear 7.

Incidentally, as described earlier, when the first rotating shaft 3 is rotated 360 degrees, the first revolving gear 7 makes one revolution. This indicates that, when the first rotating shaft 3 is rotated at high speed, the first revolving gear 7 revolves at high speed, and there is fear that vibrations will be generated. However, in the speed reducer 1, two gears: the first revolving gear 7 and the second revolving gear 8 are provided, and the first revolving gear 7 and the second revolving gear 8 revolve while being shifted from each other by a half cycle. As a result, the vibration generated by the swinging motion of the first revolving gear 7 is cancelled out by the vibration generated by the swinging motion of the second revolving gear 8. This makes it possible for the speed reducer 1 as a whole to avoid the generation of vibrations.

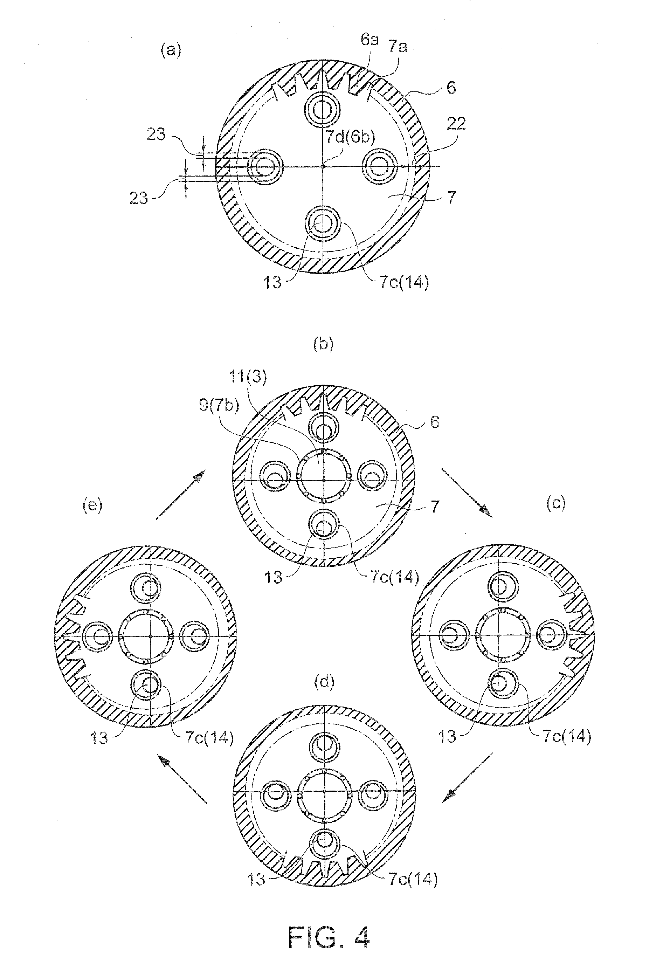

Figs. 4A to 4E are schematic diagrams illustrating a method for outputting the rotation torque of the first revolving gear. A method for outputting the rotation torque of the first revolving gear 7 is the same as a method for outputting the rotation torque of the second revolving gear 8. Therefore, only the method for outputting the rotation torque of the first revolving gear 7 will be described, and the description of the method for outputting the rotation torque of the second revolving gear 8 is omitted. First, the size of the first through hole 7c will be described. As shown in Fig. 4A, the space between the center 7d of the first revolving gear 7 and a center 6b of the ring gear 6 when the gear teeth 6a and the gear teeth 7a are made to mesh with each other is referred to as the amount of eccentricity 22. In other words, the amount of eccentricity 22 is the difference between the radius of a pitch circle of the first revolving gear 7 and the radius of a pitch circle of the ring gear 6. In addition, the difference between the radius of the inside diameter of the first elastic section 14 and the radius of the through pin 13 is referred to as a hole pin radius difference 23. The hole pin radius difference 23 is made smaller than the amount of eccentricity 22.

As shown in Fig. 4B, the first eccentric cam 11 makes the first revolving gear 7 eccentric to an upper side in the drawing. This makes the first revolving gear 7 eccentric to the upper side by the amount of eccentricity 22. As a result, the lower side of the side face of the through pin 13 comes into contact with the lower side of the inner wall of the first elastic section 14. At this time, a portion of the first elastic section 14 corresponding to the difference between the hole pin radius difference 23 and the amount of eccentricity 22 is pressed and deformed.

As shown in Fig. 4C, the first revolving gear 7 is moved to a right side in the drawing by the first eccentric cam 11. At this time, the left side face of the through pin 13 comes into contact with the left side of the inner wall of the first elastic section 14. Likewise, as shown in Fig. 4D, when the first revolving gear 7 is moved to a lower side in the drawing, the upper side of the through pin 13 comes into contact with the upper side of the inner wall of the first elastic section 14. As shown in Fig. 4E, when the first revolving gear 7 is moved to a left side in the drawing, the right side face of the through pin 13 comes into contact with the right side of the inner wall of the first elastic section 14.

As described above, in the speed reducer 1, the radius of the inside diameter of the first elastic section 14 is made larger than the radius of the through pin 13 by an amount corresponding to the hole pin radius difference 23. By doing so, the position of the first through hole 7c is moved when the first revolving gear 7 rotates on the axis thereof, and the movement of the first through hole 7c is transferred to the through pin 13. This allows the through pin 13 to extract the movement of the rotation of the first revolving gear 7 on the axis thereof.

The extracted rotation of the first revolving gear 7 on the axis thereof is transferred to the upper lid plate 18 and the lower lid plate 16 of the main body section 2, the upper lid plate 18 and the lower lid plate 16 to which the through pin 13 is attached. As a result, the second rotating shaft 4 secured to the upper lid plate 18 rotates in response to the rotation of the first revolving gear 7 on the axis thereof, and the torque by which the first revolving gear 7 rotates on the axis thereof is output to the outside of the speed reducer 1. In a similar way, the torque by which the second revolving gear 8 rotates on the axis thereof is output to the outside of the speed reducer 1.

As shown in Figs. 4B to 4E, when the first revolving gear 7 revolves along the inside of the ring gear 6, the through pin 13 and the first elastic section 14 always make contact with each other in one spot, and the spot where the through pin 13 and the first elastic section 14 make contact with each other is always moving. When the dimensions of the parts forming the speed reducer 1 are changed for a production reason, the hole pin radius difference 23 is changed from the set value. At this time, in response to the change in the hole pin radius difference 23, the amount of deformation of the first elastic section 14 is changed. This makes it possible to prevent the through pin 13 and the first through hole 7c from colliding with each other and bringing about a state in which the speed reducer 1 is locked.

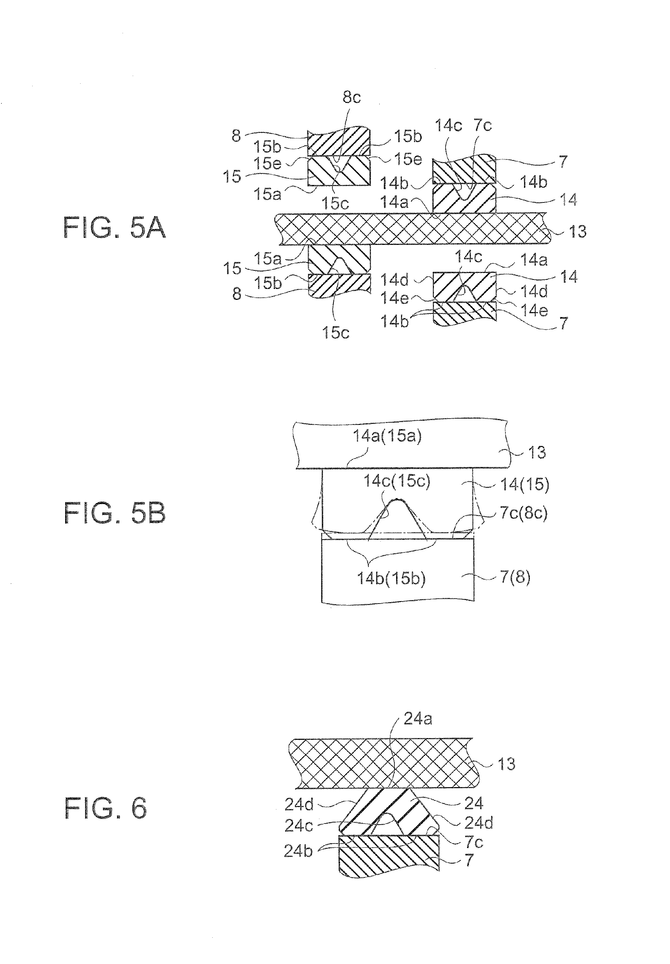

Fig. 5A is a schematic sectional view of a principal portion, the schematic sectional view showing the elastic sections. As shown in Fig. 5A, the first elastic section 14 is fitted into the first through hole 7c of the first revolving gear 7, and the second elastic section 15 is fitted into the second through hole 8c of the second revolving gear 8. In addition, the through pin 13 is placed through the first elastic section 14 and the second elastic section 15. A face of the first elastic section 14, the face where the first elastic section 14 makes contact with the through pin 13, is referred to as a first inner periphery 14a, and a face of the first elastic section 14, the face where the first elastic section 14 makes contact with the first revolving gear 7, is referred to as a first outer periphery 14b. Likewise, a face of the second elastic section 15, the face where the second elastic section 15 makes contact with the through pin 13, is referred to as a second inner periphery 15a, and a face of the second elastic section 15, the face where the second elastic section 15 makes contact with the second revolving gear 8, is referred to as a second outer periphery 15b. The first elastic section 14 and the second elastic section 15 are disposed in such a way that part of the first inner periphery 14a and part of the second inner periphery 15a make contact with the through pin 13.

The first elastic section 14 has two side faces 14d facing in the axial direction of the through pin 13. In addition, in places where the first outer periphery 14b and the side faces 14d of the first elastic section 14 intersect with each other, chamfered portions 14e are formed. Each chamfered portion 14e is an inclined surface obliquely intersecting with the first outer periphery 14b and has a shape obtained by linearly cutting off an angle at which the first outer periphery 14b and the side face 14d intersect with each other. This makes it possible to insert the first elastic section 14 into the first through hole 7c easily at the time of assembly. Also in the second elastic section 15, as is the case with the chamfered portions 14e of the first elastic section 14, chamfered portions 15e are formed. This makes it possible to insert the second elastic section 15 into the second through hole 8c easily at the time of assembly. In the first outer periphery 14b, a groove portion 14c is formed in a circumferential direction, and, in the second outer periphery 15b, a groove portion 15c is formed in a circumferential direction. The groove portion 14c and the groove portion 15c each have a triangular cross-sectional shape, in which the triangle has an arc-shaped vertex.

Fig. 5B is a schematic sectional view of a principal portion, the schematic sectional view illustrating the deformation of the elastic section. The first elastic section 14 and the second elastic section 15 have the same structure. The following description deals only with the first elastic section 14, and the description of the second elastic section 15 is omitted. However, the second elastic section 15 behaves in a manner similar to the first elastic section 14 and produces an advantage similar to that of the first elastic section 14. As shown in Fig. 5B, when the first elastic section 14 is pressed by the first revolving gear 7 and the through pin 13, the first elastic section 14 is elastically deformed in a direction in which portions of the first elastic section 14, the portions sandwiching the groove portion 14c, are moved away from each other. Therefore, the first elastic section 14 functions as an elastic member which expands and contracts in a diametrical direction.

The groove portion 14c has a triangular cross-sectional shape and is deformed in such a way that an opening on the side thereof where the first outer periphery 14b is located is widened. As a result, the stress tends to be concentrated onto a point corresponding to the vertex of the triangle. In addition, the point serving as the vertex is formed to be arc-shaped. This makes it possible to alleviate concentration of stress on the point serving as the vertex of the triangle.

On the side of the first elastic section 14 where the first outer periphery 14b is located, the groove portion 14c and the chamfered portions 14e are formed. Therefore, the total area of the first outer periphery 14b in the first elastic section 14 is smaller than the total area of the first inner periphery 14a. When the first revolving gear 7 rotates, the first elastic section 14 presses and moves the through pin 13. At this time, since the through pin 13 slides on the first inner periphery 14a, the first inner periphery 14a wears. Although the first outer periphery 14b also slides in the first through hole 7c, since the first outer periphery 14b has a larger radius of a curved surface than the first inner periphery 14a and has a smaller curvature than the first inner periphery 14a, the pressure applied thereto is smaller than that applied to the first inner periphery 14a. As a result, the first outer periphery 14b is resistant to wear as compared to the first inner periphery 14a. In this embodiment, the total area of the first inner periphery 14a in the first elastic section 14 is made larger than the total area of the first outer periphery 14b. This makes it possible to make the first inner periphery 14a resistant to wear even when the first inner periphery 14a rubs against the through pin 13.

The first elastic section 14 has one first inner periphery 14a and has two first outer peripheries 14b. In other words, the number of first inner peripheries 14a of the first elastic section 14 is smaller than the number of first outer peripheries 14b. As the number of faces increases, the area of places separating the faces becomes large. Therefore, it is possible to make the area of a place making contact with the through pin 13 reliably larger than the area of a place making contact with the first through hole 7c. In addition, since there is no need for processing for dividing the face on the side where the through pin 13 is located into a plurality of faces, it is possible to produce the first elastic section 14 with great productivity.

The material of the first elastic section 14 and the second elastic section 15 simply has to be a material that has high strength and is resistant to a repetitive load, and is not limited to a particular material. As such a material, stainless steel, superhard steel, and the like can be used. In this embodiment, for example, stainless steel is used as the material of the first elastic section 14 and the second elastic section 15. Since stainless steel has higher strength than common steel, it is possible to increase the life of the first elastic section 14 and the second elastic section 15 to which a repetitive load is applied.

On the first inner periphery 14a and the first outer periphery 14b of the first elastic section 14, a DLC coating is formed. Likewise, on the second inner periphery 15a and the second outer periphery 15b of the second elastic section 15, a DLC coating is formed. Since the DLC coating has high hardness and is resistant to wear, it is possible to prevent the elastic sections from wearing.

### Comparative Example

Fig. 6 is a schematic sectional view of a principal portion, the schematic sectional view showing an elastic section according to a comparative example. As shown in Fig. 6, between the through pin 13 and the first revolving gear 7, a third elastic section 24 is placed. The third elastic section 24 as an elastic section having a virtually cylindrical shape and elasticity is fitted into each first through hole 7c in such a way as to make contact with the inner wall of the first through hole 7c, and is placed in such a way that the inner wall of the third elastic section 24 makes contact with the through pin 13. Therefore, when the first revolving gear 7 rotates, each first through hole 7c presses the through pin 13 by means of the third elastic section 24.

A face where the third elastic section 24 makes contact with the through pin 13 is referred to as a third inner periphery 24a, and a face where the third elastic section 24 makes contact with the first revolving gear 7 is referred to as a third outer periphery 24b. In the third outer periphery 24b, a groove portion 24c is formed in a circumferential direction. Faces of the third elastic section 24, the faces facing in the axial direction of the through pin 13, are formed as inclined surfaces 24d which are inclined from the side where the first revolving gear 7 is located to the side where the through pin 13 is located. As a result, when a load is applied between the first revolving gear 7 and the through pin 13, the third elastic section 24 is easily deformed. When the third elastic section 24 is deformed greatly, the difference between the angle of rotation of the first revolving gear 7 and the second rotating shaft 4 becomes large. Therefore, with the structure of the third elastic section 24, it is difficult to prevent backlash. Moreover, since the sum of the area of the third inner periphery 24a is smaller than the sum of the area of the third outer periphery 24b, the third inner periphery 24a tends to wear. As a result, the life of the third elastic section 24 is reduced.

As described above, according to this embodiment, the following effects can be obtained.

(1) According to this embodiment, the first elastic section 14 is placed between the first through hole 7c and the through pin 13, and the first elastic section 14 makes contact with the first through hole 7c and the through pin 13. In addition, the first elastic section 14 urges the through pin 13 and the first through hole 7c. Therefore, when the first revolving gear 7 rotates, the first elastic section 14 is deformed, and the torque of the first revolving gear 7 is transferred to the through pin 13. When the direction of rotation of the first revolving gear 7 is switched, the amount of deformation of the first elastic section 14 is changed in response to changes in the torque of the first revolving gear 7. As a result, since a state in which the first elastic section 14 and the first through hole 7c make contact with each other is maintained even when the direction of rotation of the first revolving gear 7 is switched, it is possible to prevent or avoid the occurrence of backlash between the through pin 13 and the first through hole 7c. Incidentally, an effect similar to that described above can be obtained also by the second elastic section 15.

(2) According to this embodiment, when the first rotating shaft 3 rotates, the through pin 13 and the first through hole 7c relatively rotate. Since the first elastic section 14 is sandwiched between the first through hole 7c and the through pin 13, the first elastic section 14 slides in the first through hole 7c and on the through pin 13. In addition, since the curvature of the first inner periphery 14a is greater than the curvature of the first outer periphery 14b, when the first revolving gear 7 rotates, the pressure applied to the first inner periphery 14a becomes greater than the pressure applied to the first outer periphery 14b, and the first inner periphery 14a tends to wear. In this embodiment, the sum of the area of the first inner periphery 14a is greater than the sum of the area of the first outer periphery 14b. Therefore, since the first elastic section 14 has a structure in which the first inner periphery 14a and the first outer periphery 14b wear in a similar manner, it is possible to increase the life determined by wear. Incidentally, an effect similar to that described above can be obtained also by the second elastic section 15.

(3) According to this embodiment, the first elastic section 14 has a cylindrical shape and has the first inner periphery 14a and the first outer periphery 14b. The first elastic section 14 has, in the first outer periphery 14b, the groove portion 14c formed in a circumferential direction. Since it is possible to deform the groove portion 14c elastically in such a way that an opening of the groove portion 14c is widened when the first elastic section 14 is pressed by the through pin 13 and the first through hole 7c, it is possible to make the first elastic section 14 elastic. Furthermore, the sum of the area of the first inner periphery 14a of the first elastic section 14 can be made greater than the sum of the area of the first outer periphery 14b.

(4) According to this embodiment, since the groove portion 14c has an arc-shaped vertex, it is possible to prevent the stress from concentrating onto the vertex. As a result, the first elastic section 14 resists damage, which makes it possible to increase the life thereof. Incidentally, an effect similar to that described above can be obtained also by the second elastic section 15.

(5) According to this embodiment, the number of first inner peripheries 14a is smaller than the number of first outer peripheries 14b. As the number of faces increases, the area of places separating the faces becomes large. Therefore, it is possible to make the area of the first inner periphery 14a which is a place making contact with the through pin 13 larger than the area of the first outer periphery 14b which is a place making contact with the first through hole 7c. Incidentally, an effect similar to that described above can be obtained also by the second elastic section 15.

(6) According to this embodiment, there is one first inner periphery 14a, and there are two first outer peripheries 14b. Therefore, it is possible to make the area of a place making contact with the through pin 13 reliably larger than the area of a place making contact with the first through hole 7c. In addition, since there is no need for processing for dividing the face on the side where the through pin 13 is located into a plurality of faces, it is possible to produce the first elastic section 14 with great productivity. Incidentally, an effect similar to that described above can be obtained also by the second elastic section 15.

(7) According to this embodiment, since the chamfered portions 14e are formed in the first elastic section 14, it is possible to make it easy to place the first elastic section 14 in the first through hole 7c. Incidentally, an effect similar to that described above can be obtained also by the second elastic section 15.

(8) According to this embodiment, the material of the first elastic section 14 and the second elastic section 15 is stainless steel. Since stainless steel has higher strength than common steel, it is possible to increase the life of the first elastic section 14 and the second elastic section 15 to which a repetitive load is applied.

(9) According to this embodiment, a DLC (diamond like carbon) coating is formed on the first inner periphery 14a and the first outer periphery 14b of the first elastic section 14. Since the DLC coating has high hardness and is resistant to wear, it is possible to prevent the first elastic section 14 from wearing. Incidentally, an effect similar to that described above can be obtained also by the second elastic section 15.

(10) According to this embodiment, two revolving gears: the first revolving gear 7 and the second revolving gear 8 are placed in the ring gear 6. In addition, a place in which the gear teeth 7a mesh with the gear teeth 6a, a place in which the gear teeth 8a mesh with the gear teeth 6a, and the central axis 5 are disposed on the same straight line. As a result, the direction of the force which the gear teeth 7a experience from the gear teeth 6a is opposite to the direction of the force which the gear teeth 8a experience from the gear teeth 6a. Therefore, it is possible to perform balanced transfer of torque between the ring gear 6, the first revolving gear 7, and the second revolving gear 8. As a result, the speed reducer 1 can reduce vibrations.

### Second Embodiment

Next, another embodiment of the speed reducer will be described by using Fig. 5A. This embodiment differs from the first embodiment in that the first elastic section 14 is fixed to the first revolving gear 7. It is to be noted that descriptions of the same component elements as those of the first embodiment will be omitted.

That is, in this embodiment, as shown in Fig. 5A, the first elastic section 14 is inserted into the first through hole 7c. In addition, the first elastic section 14 is fixed to the first revolving gear 7. As a method for fixing the first elastic section 14 to the first revolving gear 7, a method using an adhesive, a method by which the first elastic section 14 is press-fitted into the first through hole 7c, a method by which the first elastic section 14 is inserted into the first through hole 7c by changing a temperature, such as shrinkage fit and expansion fit, and other methods can be used. In this embodiment, for example, the method by which the first elastic section 14 is press-fitted into the first through hole 7c is adopted.

As a result, to the first through hole 7c, the first elastic section 14 that makes contact with the through pin 13, has a virtually cylindrical shape, and has elasticity is fixed. In addition, in the first outer periphery 14b of the first elastic section 14, the groove portion 14c is formed in a circumferential direction. Incidentally, the second elastic section 15 can also be structured in the same manner.

As described above, according to this embodiment, the following effects can be obtained.

(1) According to this embodiment, since a state in which the through pin 13 and the first through hole 7c make contact with each other with the first elastic section 14 sandwiched between the through pin 13 and the first through hole 7c is maintained, it is possible to prevent or avoid the occurrence of backlash between the through pin 13 and the first through hole 7c.

(2) According to this embodiment, the first elastic section 14 has, in the first outer periphery 14b, the groove portion 14c formed in a circumferential direction. Since it is possible to deform the first elastic section 14 elastically in such a way that an opening of the groove portion 14c is widened when the first elastic section 14 is pressed by the through pin 13 and the first through hole 7c, it is possible to make the first elastic section 14 elastic. In addition, since the first outer periphery 14b of the first elastic section 14 is fixed to the first through hole 7c, it is possible to prevent the first outer periphery 14b from wearing. This makes it possible to increase the life of the first outer periphery 14b, the life determined by wear.

### Third Embodiment

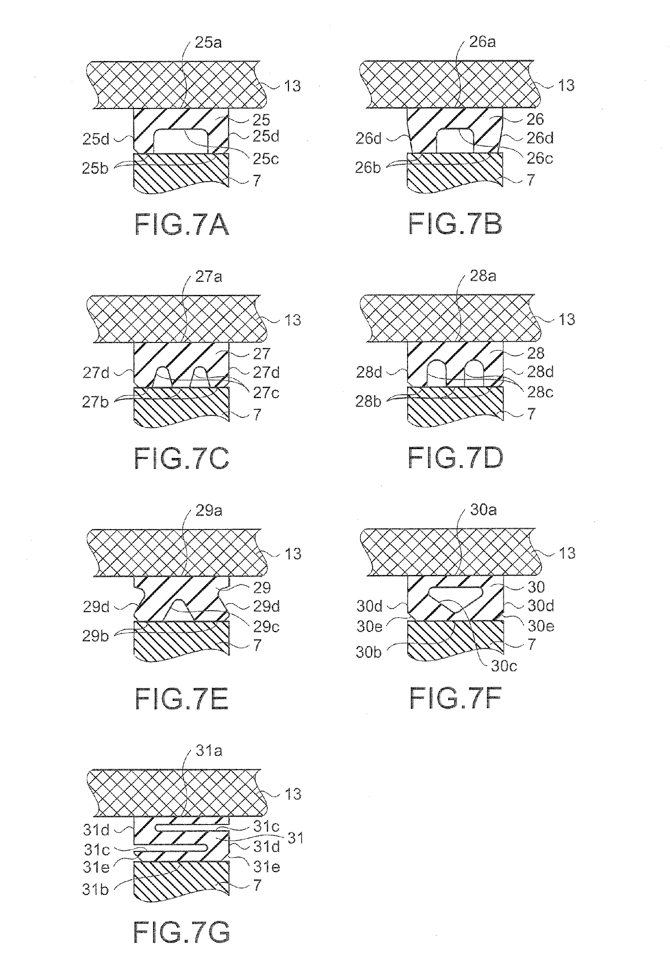

Next, still another embodiment of the speed reducer will be described by using schematic sectional views of a principal portion, the schematic sectional views showing elastic sections of Figs. 7A to 7G. This embodiment differs from the first embodiment in the cross-sectional shapes of the first elastic section 14 and the second elastic section 15. It is to be noted that descriptions of the same component elements as those of the first embodiment will be omitted.

That is, in this embodiment, as shown in Fig. 7A, a fourth elastic section 25 may be disposed between the through pin 13 and the first revolving gear 7. Moreover, the fourth elastic section 25 may be disposed between the through pin 13 and the second revolving gear 8. A face where the fourth elastic section 25 makes contact with the through pin 13 is referred to as a fourth inner periphery 25a, and a face where the fourth elastic section 25 makes contact with the first revolving gear 7 is referred to as a fourth outer periphery 25b. The fourth elastic section 25 is disposed in such a way that part of the fourth inner periphery 25a makes contact with the through pin 13 and the fourth outer periphery 25b makes contact with the first revolving gear 7.

In the fourth outer periphery 25b, a groove portion 25c having a rectangular cross-sectional shape is formed. In addition, the groove portion 25c has arc-shaped corners. The fourth elastic section 25 has a pair of side faces 25d facing in an axial direction of the through pin 13. When a load is applied between the through pin 13 and the first revolving gear 7, a member located between the groove portion 25c and the side face 25d is deformed. As a result, the fourth elastic section 25 has an elastic structure. In addition, the sum of the area of the fourth inner periphery 25a is greater than the sum of the area of the fourth outer periphery 25b. In other respects, the fourth elastic section 25 is similar to the first elastic section 14 and descriptions thereof will be omitted.

As shown in Fig. 7B, a fifth elastic section 26 may be disposed between the through pin 13 and the first revolving gear 7. Moreover, the fifth elastic section 26 may be disposed between the through pin 13 and the second revolving gear 8. A face where the fifth elastic section 26 makes contact with the through pin 13 is referred to as a fifth inner periphery 26a, and a face where the fifth elastic section 26 makes contact with the first revolving gear 7 is referred to as a fifth outer periphery 26b. The fifth elastic section 26 is disposed in such a way that part of the fifth inner periphery 26a makes contact with the through pin 13 and the fifth outer periphery 26b makes contact with the first revolving gear 7.

In the fifth outer periphery 26b, a groove portion 26c having a rectangular cross-sectional shape is formed. In addition, the groove portion 26c has arc-shaped corners. The fifth elastic section 26 has two side faces 26d facing in an axial direction of the through pin 13. The side faces 26d are inclined with respect to the axial direction of the through pin 13. In addition, as the side face 26d is closer to the fifth outer periphery 26b, the distance between the groove portion 26c and the side face 26d decreases. When a load is applied between the through pin 13 and the first revolving gear 7, a member located between the groove portion 26c and the side face 26d is deformed. Since the side face 26d is formed as an inclined surface, the fifth elastic section 26 is easily deformed. As a result, the fifth elastic section 26 has an elastic structure. In addition, the sum of the area of the fifth inner periphery 26a is greater than the sum of the area of the fifth outer periphery 26b. In other respects, the fifth elastic section 26 is similar to the first elastic section 14 and descriptions thereof will be omitted.

As shown in Fig. 7C, a sixth elastic section 27 may be disposed between the through pin 13 and the first revolving gear 7. Moreover, the sixth elastic section 27 may be disposed between the through pin 13 and the second revolving gear 8. A face where the sixth elastic section 27 makes contact with the through pin 13 is referred to as a sixth inner periphery 27a, and a face where the sixth elastic section 27 makes contact with the first revolving gear 7 is referred to as a sixth outer periphery 27b. The sixth elastic section 27 is disposed in such a way that part of the sixth inner periphery 27a makes contact with the through pin 13 and the sixth outer periphery 27b makes contact with the first revolving gear 7.

In the sixth outer periphery 27b, two groove portions 27c having a triangular cross-sectional shape are formed. In addition, each groove portion 27c has an arc-shaped vertex. The sixth elastic section 27 has two side faces 27d facing in an axial direction of the through pin 13. When a load is applied between the through pin 13 and the first revolving gear 7, a member located between the two groove portions 27c and a member located between the groove portion 27c and the side face 27d are deformed. As a result, the sixth elastic section 27 has an elastic structure. In addition, the sum of the area of the sixth inner periphery 27a is greater than the sum of the area of the sixth outer periphery 27b. In other respects, the sixth elastic section 27 is similar to the first elastic section 14 and descriptions thereof will be omitted.

As shown in Fig. 7D, a seventh elastic section 28 may be disposed between the through pin 13 and the first revolving gear 7. Moreover, the seventh elastic section 28 may be disposed between the through pin 13 and the second revolving gear 8. A face where the seventh elastic section 28 makes contact with the through pin 13 is referred to as a seventh inner periphery 28a, and a face where the seventh elastic section 28 makes contact with the first revolving gear 7 is referred to as a seventh outer periphery 28b. The seventh elastic section 28 is disposed in such a way that part of the seventh inner periphery 28a makes contact with the through pin 13 and part of the seventh outer periphery 28b makes contact with the first revolving gear 7.

In the seventh outer periphery 28b, two groove portions 28c having a quadrangular cross-sectional shape are formed. In addition, a corner of each groove portion 28c, the corner closer to the seventh inner periphery 28a, is formed to be arc-shaped. The seventh elastic section 28 has two side faces 28d facing in an axial direction of the through pin 13. When a load is applied between the through pin 13 and the first revolving gear 7, a member located between the two groove portions 28c and a member located between the groove portion 28c and the side face 28d are deformed. As a result, the seventh elastic section 28 has an elastic structure. In addition, the sum of the area of the seventh inner periphery 28a is greater than the sum of the area of the seventh outer periphery 28b. In other respects, the seventh elastic section 28 is similar to the first elastic section 14 and descriptions thereof will be omitted.

As shown in Fig. 7E, an eighth elastic section 29 may be disposed between the through pin 13 and the first revolving gear 7. Moreover, the eighth elastic section 29 may be disposed between the through pin 13 and the second revolving gear 8. A face where the eighth elastic section 29 makes contact with the through pin 13 is referred to as an eighth inner periphery 29a, and a face where the eighth elastic section 29 makes contact with the first revolving gear 7 is referred to as an eighth outer periphery 29b. The eighth elastic section 29 is disposed in such a way that part of the eighth inner periphery 29a makes contact with the through pin 13 and part of the eighth outer periphery 29b makes contact with the first revolving gear 7.

In the eighth outer periphery 29b, a groove portion 29c having a triangular cross-sectional shape is formed. In addition, a corner of the groove portion 29c, the corner closer to the eighth inner periphery 29a, is formed to be arc-shaped. The eighth elastic section 29 has two side faces 29d facing in an axial direction of the through pin 13. The side faces 29d each have a recess between the eighth inner periphery 29a and the eighth outer periphery 29b. When a load is applied between the through pin 13 and the first revolving gear 7, a member located between the groove portion 29c and the side face 29d is deformed. Since the side faces 29d each have a recess, the eighth elastic section 29 is easily deformed. As a result, the eighth elastic section 29 has an elastic structure. In addition, the sum of the area of the eighth inner periphery 29a is greater than the sum of the area of the eighth outer periphery 29b. In other respects, the eighth elastic section 29 is similar to the first elastic section 14 and descriptions thereof will be omitted.

As shown in Fig. 7F, a ninth elastic section 30 may be disposed between the through pin 13 and the first revolving gear 7. Moreover, the ninth elastic section 30 may be disposed between the through pin 13 and the second revolving gear 8. A face where the ninth elastic section 30 makes contact with the through pin 13 is referred to as a ninth inner periphery 30a, and a face where the ninth elastic section 30 makes contact with the first revolving gear 7 is referred to as a ninth outer periphery 30b. The ninth elastic section 30 is disposed in such a way that part of the ninth inner periphery 30a makes contact with the through pin 13 and the ninth outer periphery 30b makes contact with the first revolving gear 7.

Inside the ninth elastic section 30, a hollow space 30c as a groove portion having a triangular cross-sectional shape is formed. In addition, the hollow space 30c has arc-shaped corners. The cross-sectional shape of the hollow space 30c is not limited to a triangular shape, and a polygonal cross-sectional shape, an elliptic cross-sectional shape, and the like can be adopted. The ninth elastic section 30 has two side faces 30d facing in an axial direction of the through pin 13. When a load is applied between the through pin 13 and the first revolving gear 7, a member located between the hollow space 30c and the side face 30d is deformed. As a result, the ninth elastic section 30 has an elastic structure. In addition, in places where the ninth outer periphery 30b and the side faces 30d intersect with each other, chamfered portions 30e are formed. The width of the ninth outer periphery 30b making contact with the first revolving gear 7 is smaller than the width of the ninth inner periphery 30a making contact with the through pin 13. As a result, the sum of the area of the ninth inner periphery 30a is greater than the sum of the area of the ninth outer periphery 30b. In other respects, the ninth elastic section 30 is similar to the first elastic section 14 and descriptions thereof will be omitted.

As shown in Fig. 7G, a tenth elastic section 31 may be disposed between the through pin 13 and the first revolving gear 7. Moreover, the tenth elastic section 31 may be disposed between the through pin 13 and the second revolving gear 8. A face where the tenth elastic section 31 makes contact with the through pin 13 is referred to as a tenth inner periphery 31a, and a face where the tenth elastic section 31 makes contact with the first revolving gear 7 is referred to as a tenth outer periphery 31b. The tenth elastic section 31 is disposed in such a way that part of the tenth inner periphery 31a makes contact with the through pin 13 and part of the tenth outer periphery 31b makes contact with the first revolving gear 7.

The tenth elastic section 31 has two side faces 31d facing in an axial direction of the through pin 13. In each side face 31d, a groove portion 31c is formed. When a load is applied between the through pin 13 and the first revolving gear 7, the groove portions 31c are deformed. As a result, the tenth elastic section 31 has an elastic structure. In the tenth outer periphery 31b, chamfered portions 31e are formed. In addition, the width of the tenth outer periphery 31b making contact with the first revolving gear 7 is smaller than the width of the tenth inner periphery 31a making contact with the through pin 13. As a result, the sum of the area of the tenth inner periphery 31a is greater than the sum of the area of the tenth outer periphery 31b. In other respects, the tenth elastic section 31 is similar to the first elastic section 14 and descriptions thereof will be omitted.

### Fourth Embodiment

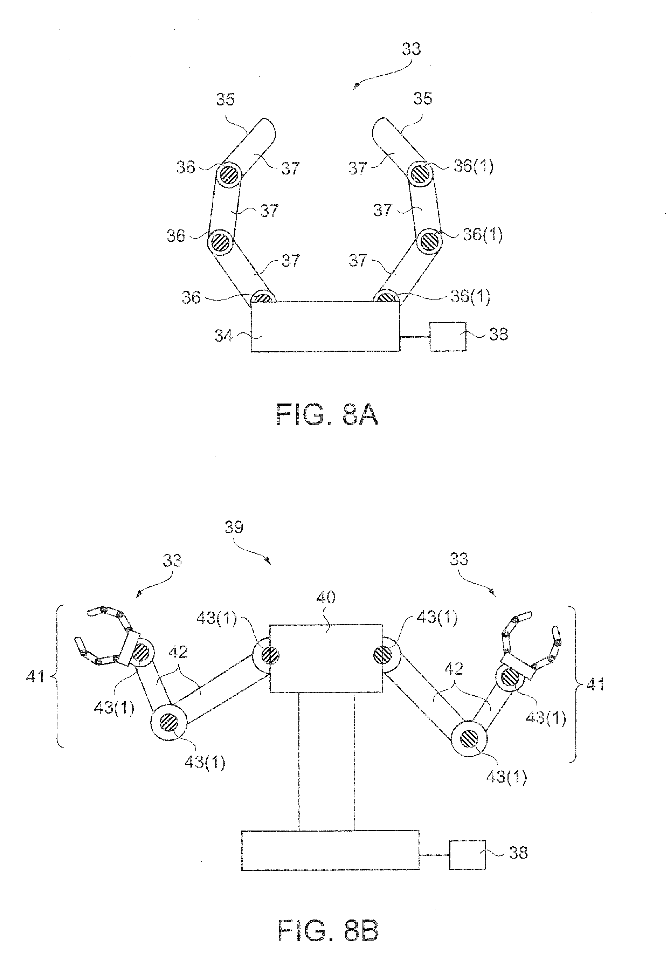

Next, an embodiment of a robot hand and a robot in which the speed reducer is placed will be described by using Figs. 8A and 8B. It is to be noted that descriptions of the same component elements as those of the first to third embodiments will be omitted.

As described earlier, the speed reducer 1 of this embodiment prevents a gap generating in a portion where the first through hole 7c makes contact with the through pin 13 and a portion where the second through hole 8c makes contact with the through pin 13. This makes it possible to prevent output delay and backlash of the second rotating shaft 4. In addition, the first elastic section 14 and the second elastic section 15 are resistant to wear. Therefore, the speed reducer 1 of this embodiment is especially suitable for use as a speed reducer attached to a portion required to perform precise operation, such as a joint of a robot hand.

Fig. 8A is a schematic plan view showing the structure of a robot hand. That is, in this embodiment, as shown in Fig. 8A, a robot hand 33 includes a hand main body section 34. In addition, on the hand main body section 34, two finger sections 35 facing each other are placed. In each finger section 35, three joint portions 36 and three movable portions 37 are disposed in such a way that the three joint portions 36 and the three movable portions 37 are alternately connected to one another.

In each joint portion 36, a motor and the speed reducer 1 are disposed. Incidentally, the speed reducer 1 is the speed reducer described in the first to third embodiments. The speed reducer 1 reduces the speed of the output of the motor. By doing so, the speed reducer 1 increases the torque output from the motor. Then, the speed reducer 1 operates the movable portion 37 by using the high torque output. The robot hand 33 includes a control unit 38. The control unit 38 drives the motors to rotate the joint portions 36. This makes it possible to deform the movable portions 37 into a desired shape like a human finger.

Fig. 8B is a schematic plan view showing the structure of a robot. That is, in this embodiment, as shown in Fig. 8B, a robot 39 includes a robot main body section 40. In the robot main body section 40, two arm sections 41 are placed. In addition, in each arm section 41, three joint portions 43 and movable portions 42 are disposed in such a way that the three joint portions 43 and the movable portions 42 are alternately connected to one another. One end of the arm section 41 is placed in the robot main body section 40, and, at the other end of the arm section 41, the robot hand 33 is placed.

In each joint portion 43, a motor and the speed reducer 1 are placed. Incidentally, the speed reducer 1 is the speed reducer described in the first to third embodiments. The speed reducer 1 reduces the speed of the output of the motor. By doing so, the speed reducer 1 increases the torque output from the motor. Then, the speed reducer 1 operates the movable portion 42 by using the high torque output. The robot 39 includes a control unit 38. The control unit 38 drives the motors to rotate the joint portions 43. This makes it possible to deform the arm section 41 into a desired shape like a human arm.

As described above, according to this embodiment, the following effects can be obtained.

(1) According to this embodiment, the speed reducer 1 is incorporated into the joint portions 36 and the joint portions 43. In the speed reducer 1, the occurrence of backlash is prevented or avoided between the through pin 13 and the first through hole 7c and between the through pin 13 and the second through hole 8c. This makes it possible to prevent output delay and backlash of the joint portions 36 and the joint portions 43 and move the joints smoothly.

(2) According to this embodiment, the speed reducer 1 includes the long-life first elastic section 14 between the through pin 13 and the first through hole 7c and the long-life second elastic section 15 between the through pin 13 and the second through hole 8c. Therefore, the speed reducer 1 provided in the robot hand 33 and the robot 39 includes the long-life first elastic section 14 between the through pin 13 and the first through hole 7c and the long-life second elastic section 15 between the through pin 13 and the second through hole 8c. As a result, the robot hand 33 and the robot 39 can be provided as a robot hand and a robot which include the speed reducer 1 in which the occurrence of backlash between the through pin 13 and the first elastic section 14 and between the through pint 13 and the second elastic section 15 is prevented or avoided.

While the speed reducers of the embodiments have been described, the invention is not limited to the embodiments described above and can be carried out in numerous ways without departing from the spirit of the invention. Some modified examples will be described below.

### Modified Example 1

In the first embodiment described above, two revolving gears: the first revolving gear 7 and the second revolving gear 8 are disposed. However, the number of revolving gears is not limited two, and there may be one revolving gear or three or more revolving gears. There may be one revolving gear when the speed can be reduced stably by only one revolving gear. In this case, it is preferable that a bearing be disposed between the second rotating shaft 4 and the ring gear 6. This makes it possible to reduce the number of revolving gears and produce the speed reducer with great productivity. When three or more revolving gears are provided, a place in which the revolving gear and the ring gear 6 make contact with each other is increased. This makes it possible to reduce vibrations of the second rotating shaft 4.

### Modified Example 2

In the first embodiment described above, the outside diameters of the first elastic section 14 and the second elastic section 15 are made virtually equal to the diameters of the first through hole 7c and the second through hole 8c. Furthermore, the inside diameters of the first elastic section 14 and the second elastic section 15 are made greater than the outside diameter of the through pin 13. In addition, the through pin 13 is moved in such a way as to make contact with the inner walls of the first elastic section 14 and the second elastic section 15. The above placement may be changed to another placement. The inside diameters of the first elastic section 14 and the second elastic section 15 are made virtually equal to the outside diameter of the through pin 13. In addition, the outside diameters of the first elastic section 14 and the second elastic section 15 are made smaller than the diameters of the first through hole 7c and the second through hole 8c. Then, the first elastic section 14 and the second elastic section 15 may be moved in such a way as to make contact with the first through hole 7c and the second through hole 8c. Also in this case, similar effects can be obtained.

In addition to those described above, the inside diameters of the first elastic section 14 and the second elastic section 15 are made greater than the outside diameter of the through pin 13. Furthermore, the outside diameters of the first elastic section 14 and the second elastic section 15 are made smaller than the diameters of the first through hole 7c and the second through hole 8c. Then, the first elastic section 14 and the second elastic section 15 are moved in such a way as to make contact with the inner walls of the first through hole 7c and the second through hole 8c. Moreover, the side face of the through pin 13 may be moved in such a way as to make contact with the inner walls of the first elastic section 14 and the second elastic section 15. Also in this case, similar effects can be obtained.

### Modified Example 3

In the second embodiment described above, the first elastic section 14 is fixed to the first through hole 7c, and the second elastic section 15 is fixed to the second through hole 8c. The first elastic section 14 may be integrated with the first revolving gear 7, and the second elastic section 15 may be integrated with the second revolving gear 8. For example, a groove having a shape similar to the shape of the groove portion 31c shown in Fig. 7G may be formed in the first revolving gear 7. This makes it possible to reduce the number of parts and produce the speed reducer with great productivity.

### Modified Example 4

In the fourth embodiment described above, the two finger sections 35 are placed in the robot hand 33. There may be one finger section 35 or three or more finger sections 35. The three joint portions 36 are placed in one finger section 35. One or two or four or more joint portions 36 may be placed in one finger section 35. The number of finger sections 35 and the number of joint portions 36 may be set in accordance with an object to be gripped by the robot hand 33. By setting the number of finger sections 35 and the number of joint portions 36 in accordance with an object to be gripped by the robot hand 33, it is possible to grip the object satisfactorily.

### Modified Example 5

In the fourth embodiment described above, the two arm sections 41 are placed in the robot 39. There may be one arm section 41 or three or more arm sections 41. The three joint portions 43 are placed in one arm section 41. One or two or four or more joint portions 43 may be placed in one arm section 41. The number of arm sections 41 and the number of joint portions 43 may be set in accordance with the operation to be performed by the robot 39 and the environment in which the robot 39 is working. By setting the number of arm sections 41 and the number of joint portions 43 in accordance with the operation to be performed by the robot 39 and the environment in which the robot 39 is working, the robots 39 can perform the operation satisfactorily.

### Modified Example 6

In the fourth embodiment described above, a case in which the speed reducer 1 is used in the robot hand 33 and the robot 39 has been described. However, the invention is not limited to such a case. The speed reducer 1 can be used as a speed reducer of an electronic apparatus that reduces the speed of a rotating shaft of a motor by the speed reducer and moves a movable portion. The speed reducer 1 can be used for various electronic apparatus such as a printer, a working machine, an automobile, a mechanism that moves a read head in a magneto-optical disk reader, and a mechanism that remote-controls a knob of an acoustic system.

## Claims

1. A speed reducer comprising:
a ring gear having a hollow, the ring gear having a plurality of gear teeth formed on an inner perimeter of the hollow;
a revolving gear having a plurality of gear teeth formed therein, the revolving gear meshing with the gear teeth on the inner perimeter of the ring gear;
a circular cam provided in a center position of the revolving gear in such a way as to be rotatable with respect to the revolving gear;
a first rotating shaft provided in the circular cam and located on a central axis of the ring gear, the first rotating shaft making the revolving gear revolve about the central axis by rotating the circular cam about the central axis;
a through pin inserted into a through hole formed in the revolving gear;
a second rotating shaft provided on the central axis and connected to the through pin, the second rotating shaft outputting rotation obtained by rotation of the revolving gear on an axis thereof; and
an elastic section located between the through hole and the through pin, the elastic section making contact with the through hole and the through pin and having elasticity,
wherein
the sum of the area of a place in which the elastic section makes contact with the through pin is greater than the sum of the area of a place in which the elastic section makes contact with the through hole.

2. The speed reducer according to claim 1, wherein
the elastic section has a cylindrical shape, and
the elastic section has a groove portion on a face of the elastic section, the face making contact with the through hole, the groove portion extending in a circumferential direction.

3. The speed reducer according to claim 2, wherein
the groove portion has a triangular cross-sectional shape.

4. The speed reducer according to claim 3, wherein
in the triangular cross-sectional shape, a triangle has an arc-shaped vertex.

5. The speed reducer according to claim 4, wherein
the elastic section has one face making contact with the through pin and has two faces making contact with the through hole.

6. The speed reducer according to claim 1, wherein
the elastic section has a side face facing in an axial direction of the through pin, and
in a place in which a face of the elastic section, the face making contact with the through hole, and the side face intersect with each other, an inclined surface obliquely intersecting with the face making contact with the through hole is formed.

7. The speed reducer according to any one of the preceding claims, wherein
a material of the elastic section is stainless steel.

8. The speed reducer according to any one of the preceding claims, wherein
on a face of the elastic section, the face making contact with the through pin, a DLC coating is formed.

9. The speed reducer according to any one of the preceding claims, wherein
on a face of the elastic section, the face making contact with the through hole, a DLC coating is formed.

10. A speed reducer comprising:
a ring gear having a hollow, the ring gear having a plurality of gear teeth formed on an inner perimeter of the hollow;
a revolving gear having a plurality of gear teeth formed therein, the revolving gear meshing with the gear teeth on the inner perimeter of the ring gear;
a circular cam provided in a center position of the revolving gear in such a way as to be rotatable with respect to the revolving gear;
a first rotating shaft provided in the circular cam and located on a central axis of the ring gear, the first rotating shaft making the revolving gear revolve about the central axis by rotating the circular cam about the central axis;
a through pin inserted into a through hole formed in the revolving gear;
a second rotating shaft provided on the central axis and connected to the through pin, the second rotating shaft outputting rotation obtained by rotation of the revolving gear on an axis thereof; and
an elastic section located between the through hole and the through pin, the elastic section making contact with the through pin, the elastic section placed by being fixed to the through hole, the elastic section having elasticity,
wherein
the elastic section has a groove portion on a side of the elastic section where the through hole is located, the groove portion extending in a circumferential direction.

11. A robot hand comprising:
a motor;
a speed reducer reducing the speed of an output of the motor; and
a movable portion that can be moved by an output of the speed reducer,
wherein
the speed reducer is the speed reducer according to any one of the preceding claims.

12. A robot comprising:
a motor;
a speed reducer reducing the speed of an output of the motor; and
a movable portion that can be moved by an output of the speed reducer,
wherein
the speed reducer is the speed reducer according to any one of the preceding claims.

13. An electronic apparatus comprising:
a motor;
a speed reducer reducing the speed of an output of the motor; and
a movable portion that can be moved by an output of the speed reducer,
wherein
the speed reducer is the speed reducer according to any one of the preceding claims 1 to 10.
